# EUROPÄISCHE PATENTANMELDUNG

(11) **EP 1 443 222 A2**
(43) Veröffentlichungstag der Anmeldung: **04.08.2004**
(21) Anmeldenummer: 04000590.2
(22) Anmeldetag: 14.01.2004
(51) Int. Cl.: F15C 5/00

(54) **Elektrostatisches Mikroventil und Verfahren zu seinem Betreiben**

(30) Priorität: 22.01.2003 DE 10302304
(71) Anmelder: FESTO AG & Co, 73734 Esslingen (DE)
(72) Erfinder: Giousouf, Metin, 73732 Esslingen (DE); Muth, Andreas, Dr., 73230 Kirchheim (DE)
(74) Vertreter: Abel, Martin

(57) **Zusammenfassung**

Es wird ein elektrostatisches Mikroventil (1) vorgeschlagen, das eine Trennwand (3) aufweist, die eine erste und eine zweite Ventilkammer (4, 5) voneinander abtrennt und die von einem Durchgangskanal (6) durchsetzt ist, der mit einer ersten (7) bzw. zweiten (8) Kanalöffnung zur ersten und zweiten Ventilkammer (4, 5) ausmündet. In der ersten Ventilkammer (4) befindet sich ein Ventilglied (16) zum Steuern der ersten Kanalöffnung (7). In der zweiten Ventilkammer (5) befindet sich ein Steuerglied (22), mit dem sich die zweite Kanalöffnung (8) zumindest teilweise verschließen lässt, um die auf das Ventilglied (16) wirkende Strömungskraft zu verringern, sodass das Ventilglied (16) mit geringer elektrostatischer Kraft in eine die erste Kanalöffnung (7) verschließende Schließstellung umschaltbar ist.

## Beschreibung

Die Erfindung betrifft ein elektrostatisches Mikroventil, mit einer Trennwand, die eine erste und eine zweite Ventilkammer voneinander abtrennt und die von einem Durchgangskanal durchsetzt ist, der mit einer ersten bzw. zweiten Kanalöffnung zur ersten und zweiten Ventilkammer ausmündet, und mit einem in der ersten Ventilkammer angeordneten Ventilglied, das mittels eines elektrostatischen Antriebes aus einer von der ersten Kanalöffnung abgehobenen Offenstellung in eine die erste Kanalöffnung verschließende Schließstellung umschaltbar ist. Die Erfindung betrifft ferner ein Verfahren zum Betreiben eines elektrostatischen Mikroventils.

Aus der US 4585209 geht ein elektrostatisches Mikroventil hervor, das eine mit einem Durchgangskanal versehene Trennwand und ein dem Durchgangskanal zugeordnetes blattfederartiges Ventilglied aufweist. Das Ventilglied liegt der stromab angeordneten ersten Kanalöffnung des Durchgangskanals gegenüber, die es fluiddicht abdeckt, wenn es sich, durch Aktivierung eines elektrostatischen Antriebes, in der Schließstellung befindet. Im deaktivierten Zustand des elektrostatischen Aktors schaltet das Ventilglied durch die Strömungskraft des über die zweite Kanalöffnung zuströmenden Fluides in die Offenstellung um.

Derartige elektrostatische Mikroventile haben in der Regel einen nur sehr kleinen Hub des Ventilgliedes, der im Bereich von wenigen µm liegt. Dies rührt daher, dass die elektrostatische Kraft mit zunehmendem Elektrodenabstand stark abfällt. Ein relativ weit geöffnetes Ventilglied könnte daher mit einem üblichen elektrostatischen Antrieb nicht mehr gegen die anstehende Strömungskraft geschlossen werden. Folglich verfügen elektrostatische Mikroventile bisher meist nur über kleine Hübe des Ventilgliedes, so dass auch nur kleine Durchflüsse steuerbar sind.

Es ist daher die Aufgabe der vorliegenden Erfindung, ein elektrostatisches Mikroventil zu schaffen, das bei geringen Ansteuerspannungen einen relativ großen Ventilgliedhub ermöglicht. Außerdem soll ein zum Betreiben eines solchen Mikroventils besonders geeignetes Verfahren vorgeschlagen werden.

Die vorstehende Aufgabe wird bei einem elektrostatischen Mikroventil der eingangs genannten Art dadurch gelöst, dass in der zweiten Ventilkammer ein der zweiten Kanalöffnung zugeordnetes, mittels eines weiteren elektrostatischen Antriebes betätigbares Steuerglied angeordnet ist, das bei die Offenstellung einnehmendem und dabei ein Überströmen von Fluid aus der zweiten in die erste Ventilkammer ermöglichendem Ventilglied aus einer die zweite Kanalöffnung freigebenden Neutralstellung in eine die zweite Kanalöffnung zumindest teilweise verschließende Steuerstellung bewegbar ist, um die auf das Ventilglied während dessen anschließenden Umschaltens in die Schließstellung einwirkende Strömungskraft zu verringern.

Die Aufgabe wird ferner gelöst durch ein Verfahren zum Betreiben eines elektrostatischen Mikroventils, das über einen eine Trennwand durchsetzenden Durchgangskanal verfügt, dessen erste Kanalöffnung durch ein elektrostatisch betätigbares Ventilglied wahlweise verschlossen oder freigegeben werden kann, wobei zum Umschalten des Ventilgliedes in die Schließstellung die zweite Kanalöffnung des Durchgangskanals mittels eines elektrostatisch betätigbaren Steuergliedes zumindest teilweise verschlossen wird, um die auf das Ventilglied einwirkende Strömungskraft zu reduzieren.

Auf diese Weise besteht die Möglichkeit, hohe Fluiddurchflüsse bei hohen Druckdifferenzen zu schalten, wobei die zum Erzeugen der elektrostatischen Schaltkräfte erforderliche Schaltspannung bei Bedarf gleichwohl auf einem geringen Niveau liegen kann. Durch das in der zweiten Ventilkammer platzierte Steuerglied kann der Durchgangskanal von der Zuströmseite her ganz oder teilweise verschlossen werden, sodass die Strömung durch den Durchgangskanal hindurch reduziert oder ganz unterbunden wird, sodass die auf das in der Offenstellung befindliche Ventilglied einwirkende Strömungskraft, bei Bedarf bis zu null, verringert wird. Für das Umschalten des Ventilgliedes in die Schließstellung wird daher eine nurmehr stark verringerte elektrostatische Kraft benötigt, die auch dann noch ausreichend ist, wenn der Ventilhub relativ groß ist und das Ventilglied in der Offenstellung relativ weit geöffnet ist. Nachdem das Ventilglied die Schließstellung einnimmt, kann das Steuerglied die zweite Kanalöffnung wieder freigeben, da aufgrund des nun herrschenden minimalen Elektrodenabstandes hohe elektrostatische Kräfte aufgebaut werden können, um selbst bei hohen Fluiddrücken eine sichere Schließstellung zu gewährleisten.

Aus der US 6098661 geht bereits ein Ventil hervor, bei dem ein zungenartiges Ventilglied elektrostatisch umschaltbar ist, um eine Art Fluidweiche zu realisieren. Die Unterstützung des Schließvorganges eines Ventilgliedes durch ein mit der entgegengesetzten Kanalöffnung eines Durchgangskanals kooperierendes Steuerglied wird allerdings nicht gelehrt.

Vorteilhafte Weiterbildungen der Erfindung gehen aus den Unteransprüchen hervor.

Es ist von Vorteil, wenn die zweite Kanalöffnung in der Steuerstellung des Steuergliedes lediglich teilweise verschlossen ist. Der im Bereich der zweiten Kanalöffnung am Steuerglied anstehende Differenzdruck bleibt auf diese Weise relativ gering, sodass das spätere Umschalten des Steuergliedes in die Neutralstellung begünstigt wird.

Der mit dem Steuerglied zusammenwirkende weitere elektrostatische Aktor ist zweckmäßigerweise so ausgebildet, dass seine elektrostatischen Kräfte in Richtung der Neutralstellung auf das Steuerglied einwirken. Es kann dann vorgesehen werden, das Steuerglied während der Offenstellung des Ventilgliedes durch den weiteren elektrostatischen Aktor in der Neutralstellung zu fixieren. Zum Umschalten in die Steuerstellung kann ein Deaktivieren des weiteren elektrostatischen Aktors genügen, wenn die Ausbildung so getroffen ist, dass der Umschaltvorgang durch die Fluidströmung unterstützt wird. Bei Bedarf kann zusätzlich oder alternativ auch eine das Steuerglied in Richtung der Steuerstellung vorspannende Federkraft vorgesehen werden.

Das Mikroventil ist vorzugsweise vom Typ "Normalerweise Geschlossen". Im drucklosen Zustand des Systems, bei gleichzeitig deaktiviertem elektrostatischem Aktor, nimmt das Ventilglied dabei die Schließstellung ein. Das Umschalten in die Offenstellung erfolgt im Betrieb durch die Strömungskraft des zuströmenden Fluides. Das anschließende Umschalten in die Schließstellung geschieht mit Unterstützung des Steuergliedes in der geschilderten Art und Weise.

Bevorzugt hat das Mikroventil einen Mehrschichtaufbau, wobei die den Durchgangskanal aufweisende Trennwand von einer Schicht gebildet ist, die auf der einen Seite von einer das Ventilglied bildenden Schicht und auf der entgegengesetzten Seite von einer das Steuerglied bildenden Schicht flankiert ist. Bevorzugt handelt es sich bei all diesen Schichten um Siliziumschichten, die durch Isolationsschichten, beispielsweise Siliziumdioxid oder Siliziumnitrid, elektrisch voneinander isoliert sind, so dass sie unmittelbar selbst die elektrostatischen Aktoren bilden können.

Nach dem erfindungsgemäßen Prinzip können Mikroventile unterschiedlicher Funktionalität realisiert werden. Besonders vorteilhaft sind 2/2- oder 3/2-Wegeventile.

Nachfolgend wird die Erfindung anhand der beiliegenden Zeichnung näher erläutert. In dieser zeigen:
- Figuren 1 bis 5: eine bevorzugte Bauform des erfindungsgemäßen Mikroventils in einer 3/2-Funktionalität, wobei unterschiedliche Schaltzustände gezeigt sind, jeweils im Längsschnitt und stark schematisiert, und
- Figur 6: ein in 2/2-Funktionalität ausgeführtes weiteres Mikroventil der erfindungsgemäßen Bauart, wobei ein Zustand gezeigt ist, bei dem das Ventilglied durch Unterstützung des Steuergliedes soeben die Schließstellung eingenommen hat.

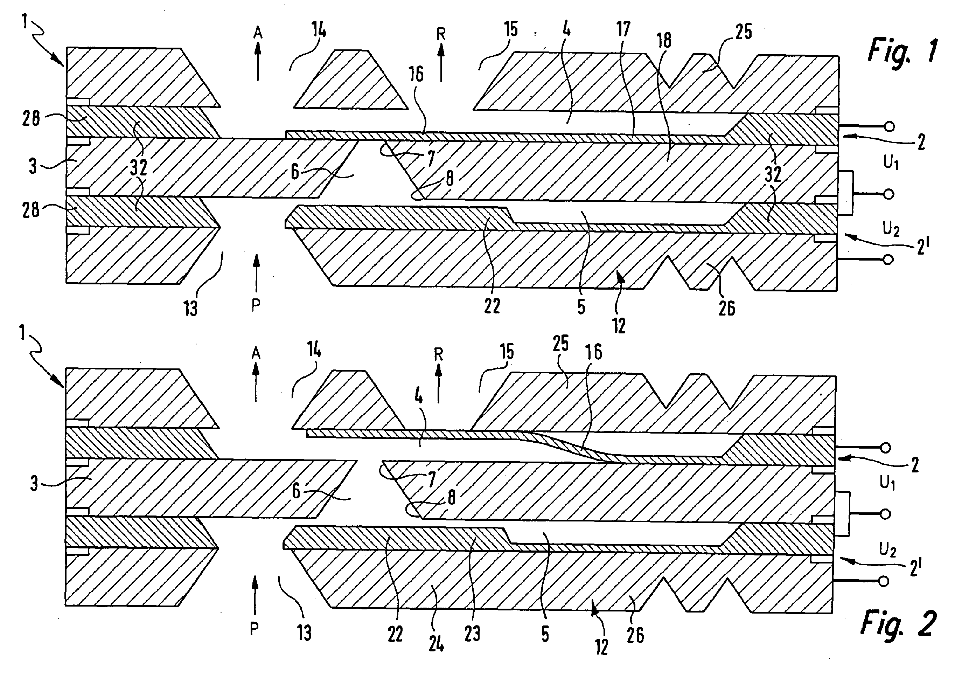

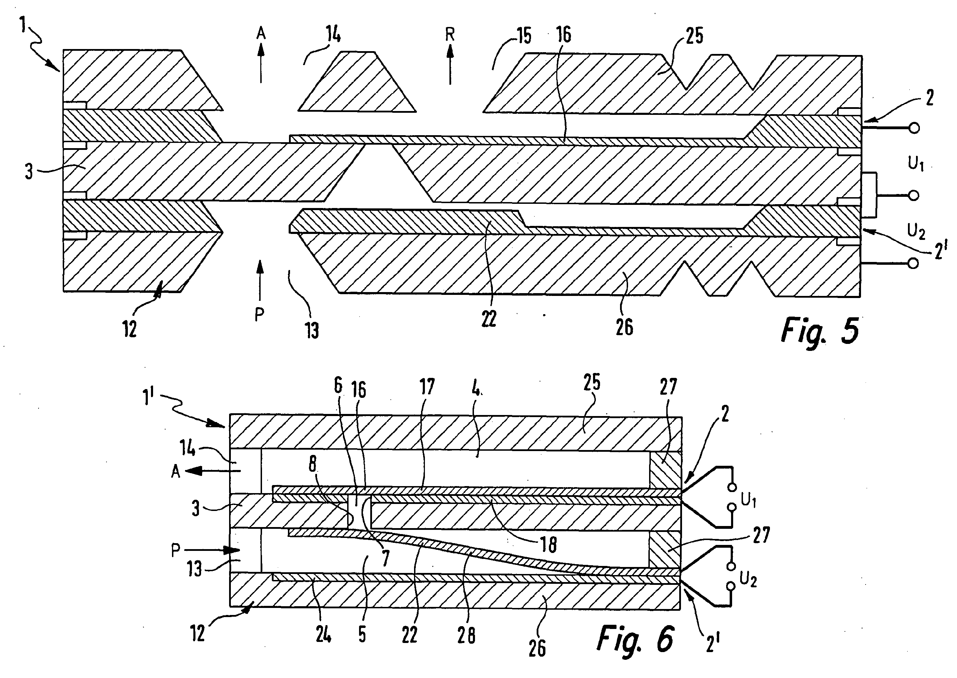

Die Figuren 1 bis 5 einerseits und Figur 6 andererseits zeigen zwei Ausführungsbeispiele des erfindungsgemäßen Mikroventils 1, 1', wobei jeweils integrierte Mittel vorhanden sind, die einen ersten und zweiten elektrostatischen Antrieb 2, 2' definieren.

Jedes Mikroventil 1, 1' verfügt über eine Trennwand 3, die eine erste und zweite Ventilkammer 4, 5 voneinander abteilt und die von einem Durchgangskanal 6 durchsetzt ist, der über eine erste Kanalöffnung 7 zur ersten Ventilkammer 4 und über eine zweite Kanalöffnung 8 zur zweiten Ventilkammer 5 ausmündet.

Die Trennwand 3 ist Bestandteil eines bevorzugt mehrschichtigen Ventilgrundkörpers 12, der die beiden Ventilkammern 4, 5 definiert. In dem Ventilgrundkörper 12 sind ein in die zweite Ventilkammer 5 einmündender Speisekanal 13 sowie ein in die erste Ventilkammer 4 einmündender Arbeitskanal 14 ausgebildet. Im Betrieb des Mikroventils 1, 1' wird der Speisekanal 13 an eine ein unter Druck stehendes Fluid liefernde Druckquelle P und der Arbeitskanal 14 an einen selektiv mit dem Fluid zu versorgenden Verbraucher A angeschlossen.

Bei dem Mikroventil 1' der Figur 6 sind keine weiteren, mit den Ventilkammern 4, 5 kommunizierenden Kanäle vorgesehen. Es handelt sich bei diesem Mikroventil 1' um ein 2/2-Wegeventil. Im Gegensatz dazu ist das Mikroventil 1 der Figuren 1 bis 5 als 3/2-Wegeventil ausgebildet, in dessen Ventilgrundkörper 12 ein zusätzlicher Entlüftungskanal 15 verläuft, der zum einen ebenfalls mit der ersten Ventilkammer 4 verbunden ist und zum anderen an die Atmosphäre R führt.

In der ersten Ventilkammer 4 befindet sich ein Ventilglied 16, das die erste Kanalöffnung 7 übergreift. Es ist relativ zu der ersten Kanalöffnung 7 im Sinne einer Annäherung oder Entfernung an die bzw. von der ersten Kanalöffnung 7 bewegbar. Die Schaltbewegung verläuft zweckmäßigerweise zumindest annähernd rechtwinkelig zur Ausdehnungsebene der Trennwand 3.

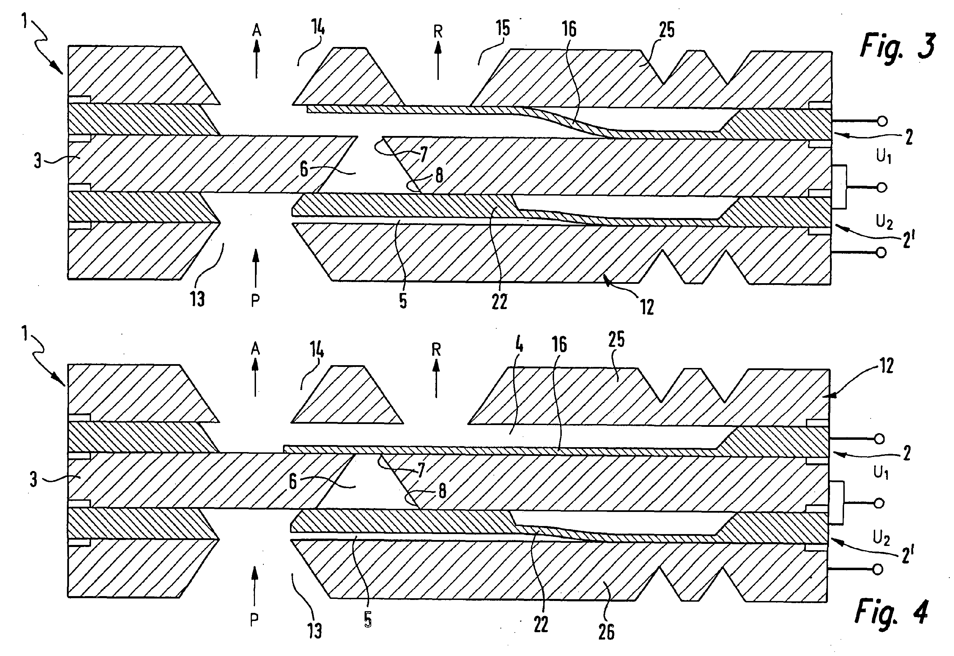

Im Rahmen dieser Schaltbewegung kann das Ventilglied 14 wahlweise in einer von der ersten Kanalöffnung 7 abgehobenen Offenstellung (Figuren 2 und 3) oder in einer die erste Kanalöffnung 4 fluiddicht verschließenden Schließstellung (Figuren 1 und 4 bis 6) positioniert werden. In der Offenstellung kann ein Fluid vom Durchgangskanal 6 in die erste Ventilkammer 4 überströmen. In der Schließstellung ist ein derartiger Fluidübertritt unterbunden. Die jeweilige Schaltstellung lässt sich durch den Einfluss des bereits angesprochenen ersten elektrostatischen Antriebes 2 vorgeben.

Das Mikroventil 1, 1' des Ausführungsbeispiels ist vom Typ "Normalerweise Geschlossen". Im drucklosen Zustand des Systems, wenn im Durchgangskanal 6 kein Überdruck ansteht, und wenn gleichzeitig der erste elektrostatische Aktor 2 deaktiviert ist, nimmt das Ventilglied 16 die die erste Kanalöffnung 7 verschließende Schließstellung ein.

Wird bei deaktiviertem erstem elektrostatischem Antrieb 2 über den Speisekanal 13 ein unter Druck stehendes Fluid eingespeist, das in den Durchgangskanal 6 gelangt, so wird das Ventilglied 16 durch die Strömungskraft in die Offenstellung umgeschaltet. Das Fluid kann nun zur ersten Ventilkammer 4 und von dort zum angeschlossenen Verbraucher A überströmen.

Bei dem Mikroventil 1 gemäß Figuren 1 bis 5 wird der Entlüftungskanal 15 von dem die Offenstellung einnehmenden Ventilglied 16 abgesperrt. Hingegen wird in der Schließstellung des Ventilgliedes 16 eine Verbindung zwischen dem Arbeitskanal 14 und dem Entlüftungskanal 15, durch die erste Ventilkammer 4 hindurch, freigeschaltet. Somit kann vom Verbraucher A rückströmendes Fluid über den Entlüftungskanal 15 abgeführt werden.

Um das Ventilglied 16 in die Schließstellung zu verbringen und dort zu halten, wird der erste elektrostatische Antrieb 2 aktiviert. Dieser verfügt über eine am Ventilglied 16 vorgesehene oder von diesem gebildete erste Elektrode 17 sowie eine an der Trennwand 3 vorgesehene oder von dieser gebildete zweite Elektrode 18. Bei Anlegen einer Ansteuerspannung U₁ bildet sich zwischen den beiden Elektroden 17, 18 ein elektrostatisches Feld aus, das das Ventilglied 16 im Sinne einer Annäherung an die Trennwand 3 beaufschlagt.

In der zweiten Ventilkammer 5 befindet sich ein beispielsweise vergleichbar dem Ventilglied 16 ausgebildetes Steuerglied 22, das wahlweise in einer aus Figuren 1, 2 und 5 hervorgehenden Neutralstellung oder einer aus Figuren 3, 4 und 6 hervorgehenden Steuerstellung positionierbar ist. Es überragt die zweite Kanalöffnung 8, von der es in der Neutralstellung abgehoben ist, sodass es einen ungehinderten Fluiddurchtritt von der zweiten Ventilkammer 5 in den Durchgangskanal 6 zulässt. In der Steuerstellung ist das Steuerglied 22 an die zweite Kanalöffnung 8 angenähert, wobei es diese vollständig - dies ist beim Ausführungsbeispiel der Figuren 1 bis 5 der Fall - oder nur teilweise - dies ist beim Ausführungsbeispiel der Figur 6 der Fall - verschließt.

Der schon erwähnte zweite elektrostatische Aktor 2' dient dazu, das Steuerglied 22 aus der Steuerstellung in die Neutralstellung umzuschalten und in der Neutralstellung zu halten. Er verfügt über eine an dem Steuerglied 22 vorgesehene oder von diesem gebildete erste Elektrode 23 sowie über eine dieser gegenüberliegende zweite Elektrode 24, die von einer zweiten Abdeckwand 26 gebildet oder daran angeordnet ist, welche zu dem Ventilgrundkörper 12 gehört und die zweite Ventilkammer 5 auf der der Trennwand 3 entgegengesetzten Seite begrenzt.

An dieser Stelle sei erwähnt, dass die erste Ventilkammer 4 an der der Trennwand 3 entgegengesetzten Seite ihrerseits von einer ersten Abdeckwand 25 des Ventilgrundkörpers 12 begrenzt ist.

Beim Ausführungsbeispiel der Figuren 1 bis 5 verläuft der Speisekanal 13 in der zweiten Abdeckwand 26, und der Arbeitskanal 14 sowie der optional vorhandene Entlüftungskanal 15 durchsetzen die erste Abdeckwand 25. Im Gegensatz dazu sind beim Ausführungsbeispiel der Figur 6 sowohl der Speisekanal 13 als auch der Arbeitskanal 14 seitlich herausgeführt und durchsetzen eine zwischen der Trennwand 3 und der jeweiligen Abdeckwand 25, 26 angeordnete Abstandshalterwand 27. Letztere gewährleisten den erforderlichen Schalthub für das Ventilglied 16 und das Steuerglied 22.

Beim Ausführungsbeispiel der Figuren 1 bis 5 wird die Abstandshalterfunktion von jeweils einem zwischen der Trennwand 3 und der ersten bzw. zweiten Abdeckwand 25, 26 angeordneten Schichtkörper 28 gebildet, der das zugeordnete Ventilglied 16 bzw. Steuerglied 22 als integrale Komponente beinhaltet. Der Schichtkörper 28 kann insbesondere einen äußeren Rahmenabschnitt 32 aufweisen, von dem aus das Ventilglied 16 bzw. das Steuerglied 22 in die zugeordnete Ventilkammer 4, 5 hineinragt.

Sowohl das Ventilglied 16 als auch das Steuerglied 22 können zungen- oder membranartig ausgebildet sein.

Die Aktivierung des zweiten elektrostatischen Antriebes 2' geschieht durch Anlegen einer Ansteuerspannung U₂ an die zugehörige erste und zweite Elektrode 23, 24. Die Schaltbewegung des Steuergliedes 22 verläuft wie die des Ventilgliedes 16 zweckmäßigerweise zumindest annähernd rechtwinkelig zur Ausdehnungsebene der Trennwand 3.

Bei den Ausführungsbeispielen führen das Ventilglied 16 und das Steuerglied 22 beim Umschalten eine Schwenkbewegung aus. Möglich sind allerdings auch Bauformen, bei denen das Ventilglied 16 und das Steuerglied 22 translatorische Schaltbewegungen ausführen.

Nachfolgend wird anhand der Figuren 1 bis 5 eine bevorzugte Betriebsweise des Mikroventils erläutert.

Zu Beginn eines Schaltzyklus liegt der Zustand gemäß Figur 1 vor. Am Speisekanal 13 steht Druckmedium an, das auch im Durchgangskanal 6 wirksam ist, weil sich das Steuerglied 22 in der Neutralstellung befindet. Zu diesem Zweck ist die Ansteuerspannung U₂ > 0. Indem gleichzeitig die Ansteuerspannung U₁ > 0 ist, befindet sich auch der erste elektrostatische Antrieb 2 im aktivierten Zustand, und das Ventilglied 16 wird in der Schließstellung gehalten. Die hierbei vom ersten elektrostatischen Antrieb 2 erzeugbare Schließkraft ist sehr hoch, weil die beiden Elektroden 17, 18 einen minimalen Abstand zueinander einnehmen.

Um den Durchfluss von der zweiten (5) zur ersten (4) Ventilkammer freizugeben, wird bei weiterhin aktiviertem zweitem elektrostatischem Antrieb 2' der erste elektrostatische Antrieb 2 deaktiviert, die Ansteuerspannung U₁ also gleich null gesetzt. Die Strömungskraft drückt somit das nicht mehr angezogene Ventilglied 16 von der ersten Kanalöffnung 7 weg.

Zwar ist das Steuerglied 22 so ausgebildet und angeordnet, dass es von der vorbeistreichenden Fluidströmung, insbesondere durch den entstehenden Unterdruck, ebenfalls eine Umschaltkraft erfährt, die die Tendenz hat, das Steuerglied 22 aus der Neutralstellung in die Steuerstellung umzuschalten. Diese Strömungskraft ist allerdings geringer als die Haltekraft des aktivierten zweiten elektrostatischen Antriebes 2', sodass das Steuerglied 22 in der Neutralstellung verbleibt. Dieser Zustand ist in Figur 2 illustriert.

Um das Mikroventil zu schließen, muss das Ventilglied 16 in die Schließstellung zurückgeschaltet werden. Da das Ventilglied 16 mit einem relativ großen Hub ausgestattet ist, was in der Offenstellung einen relativ großen Abstand zwischen der ersten und zweiten Elektrode 17, 18 des ersten elektrostatischen Antriebes 2 zur Folge hat, reicht die vom ersten elektrostatischen Antrieb 2 ausübbare Schließkraft nicht aus, um das Ventilglied 16 entgegen der ständig auf es einwirkenden Strömungskraft in die Schließstellung zurückzuschalten.

Daher ist zum Schließen des Mikroventils ein zusätzliches Umschalten des Steuergliedes 22 in die Steuerstellung vorgesehen.

Um den Schließvorgang herbeizuführen, wird der erste elektrostatische Antrieb 2 aktiviert und zugleich der zweite elektrostatische Antrieb 2' deaktiviert. Die Deaktivierung des zweiten elektrostatischen Antriebes 2' hat zur Folge, dass das Steuerglied 22 durch die weiterhin vorhandene Fluidströmung - das Ventilglied 16 befindet sich ja noch in der Offenstellung - in die Steuerstellung umgeschaltet wird. In diesem in Figur 3 gezeigten Zustand ist der Durchgangskanal 6 von der zweiten Kanalöffnung 8 her durch das Steuerglied 22 verschlossen, sodass die Fluidströmung unterbunden ist. Dementsprechend wird das Ventilglied 16 nicht mehr oder zumindest in nur reduziertem Maße von einer Strömungskraft in Richtung der Offenstellung beaufschlagt, sodass die durch den ersten elektrostatischen Antrieb 2 erzeugbare Stellkraft ausreicht, um das Ventilglied 16 in die Schließstellung umzuschalten, was in Figur 4 gezeigt ist.

Das bei diesem Vorgang stattfindende gleichzeitige Deaktivieren des zweiten elektrostatischen Antriebes 2' und Aktivieren des ersten elektrostatischen Antriebes 2 ergibt eine optimal kurze Umschaltzeit. Es wäre allerdings durchaus möglich, das Umschalten des Steuergliedes 22 in die Steuerstellung zeitlich vor dem Aktivieren des ersten elektrostatischen Antriebes 2 zu initiieren.

Beim Ausführungsbeispiel ist das Steuerglied 22 so ausgebildet, dass es im drucklosen Zustand des Systems und bei deaktiviertem zweitem elektrostatischem Antrieb 2' die Neutralstellung einnimmt. Es ist allerdings auch eine Bauform möglich, bei der das Steuerglied zusätzlich durch eine Federkraft in Richtung der Steuerstellung vorgespannt ist. Dies ist beim Ausführungsbeispiel der Figur 6 der Fall. Das Steuerglied 22 kann in diesem Zusammenhang blattfederartig ausgebildet sein, was im Übrigen auch für das Ventilglied 16 zutrifft.

Nachdem das Ventilglied 16 gemäß Figur 4 die Schließstellung einnimmt, wird der zweite elektrostatische Antrieb 2' erneut aktiviert und somit das Steuerglied 22 in die Neutralstellung zurückgeschaltet, sodass der in Figur 5 gezeigte Zustand vorliegt. Das Ventilglied 16 verharrt dabei in der Schließstellung, da wegen des reduzierten Elektrodenabstandes die elektrostatischen Kräfte des ersten elektrostatischen Antriebes 2 nun wieder ausreichen, um die Schließstellung zu halten.

Wenn das Steuerglied 22 die zweite Kanalöffnung 8 in der Steuerstellung komplett verschließt, bildet sich eine relativ große Druckdifferenz am Steuerglied 22 aus, die von den elektrostatischen Stellkräften des zweiten elektrostatischen Antriebes 2' überwunden werden müssen, um das Steuerglied 22 in die Neutralstellung zurückzuschalten. Es wird daher als zweckmäßig angesehen, das Steuerglied 22 so auszulegen, dass es in seiner Steuerstellung die zweite Kanalöffnung 8 gemäß Figur 6 nicht vollständig verschließt. Dieser Teilverschluss reicht aus, um die Strömung durch den Durchgangskanal 6 zu verringern und somit die das Umschalten des Ventilgliedes 16 begünstigende Reduzierung der Strömungskräfte herbeizuführen. Gleichzeitig wird aber erreicht, dass die zwischen den beiden Seiten des Steuergliedes 22 gemessene Druckdifferenz geringer ist, sodass die das Steuerglied 22 in die Steuerstellung drückende Fluidkraft geringer ausfällt und eine geringere elektrostatische Stellkraft des zweiten elektrostatischen Antriebes 2' ausreicht, um das Steuerglied 22 in die Neutralstellung zurückzuschalten. Somit kann der zweite elektrostatische Antrieb 2' mit geringeren Abmessungen ausgebildet werden und, wie auch der erste elektrostatische Antrieb 2, mit verhältnismäßig geringen Ansteuerspannungen betrieben werden.

Einige Vorteile der exemplarisch beschriebenen Mikroventile 1, 1' lassen sich wie folgt zusammenfassen: Durch die gewählte Ausgestaltung und Ansteuerung muss das Ventilglied 16 nicht mehr gegen eine relevante Strömungskraft geschlossen werden, was kleinere Ansteuerspannungen und / oder kleinere Elektrodenflächen erlaubt. Es sind große Schalthübe möglich und somit große Nennweiten schaltbar. Die Auslegung der Federsteifigkeit des Ventilgliedes 16 und des Steuergliedes 22 ist unkritisch. Ferner können das Ventilglied 16 und das Steuerglied 22 relativ dünn gestaltet werden, sodass eine flexible Anpassung an die die zugeordnete Kanalöffnung 7, 8 umgebende Ventilsitzkontur möglich ist.

Durch das Mikroventil 1, 1' kann erreicht werden, dass ein automatisches Schließen stattfindet, wenn zu hohe Druckdifferenzen auftreten. Dabei kann durch die jeweils eingestellte Höhe der Ansteuerspannung U₂ die auf das Steuerglied 22 einwirkende Haltekraft variabel vorgegeben werden, um den Schaltpunkt zu definieren, bei dem das Steuerglied 22 durch die Strömungskraft in die Steuerstellung umschaltet.

Wenn das Mikroventil wie beim Ausführungsbeispiel vom Typ "Normalerweise Geschlossen" ist, schaltet das Ventilglied 16 üblicherweise selbsttätig aus der Offenstellung in die Schließstellung, wenn durch das Steuerglied 22 die Fluidströmung durch den Durchgangskanal 6 hindurch unterbunden ist. Die vom ersten elektrostatischen Antrieb 2 aufzubringende Kraft wird dann lediglich dazu verwendet, das Ventilglied 16 auf der ersten Kanalmündung 7 zu halten. Allerdings kann das Mikroventil auch so ausgebildet werden, dass das Ventilglied 16 im drucklosen Zustand die Offenstellung einnimmt. In diesem Falle wird das Ventilglied 16 zweckmäßigerweise so ausgebildet, dass es federnd in die Offenstellung vorgespannt ist.

## Patentansprüche

1. Elektrostatisches Mikroventil, mit einer Trennwand (3), die eine erste und eine zweite Ventilkammer (4, 5) voneinander abtrennt und die von einem Durchgangskanal (6) durchsetzt ist, der mit einer ersten bzw. zweiten Kanalöffnung (7, 8) zur ersten und zweiten Ventilkammer (4, 5) ausmündet, und mit einem in der ersten Ventilkammer (4) angeordneten Ventilglied (16), das mittels eines elektrostatischen Antriebes (2) aus einer von der ersten Kanalöffnung (7) abgehobenen Offenstellung in eine die erste Kanalöffnung (7) verschließende Schließstellung umschaltbar ist, **dadurch gekennzeichnet, dass** in der zweiten Ventilkammer (5) ein der zweiten Kanalöffnung (8) zugeordnetes, mittels eines weiteren elektrostatischen Antriebes (2') betätigbares Steuerglied (22) angeordnet ist, das bei die Offenstellung einnehmendem und dabei ein Überströmen von Fluid aus der zweiten (5) in die erste (4) Ventilkammer ermöglichendem Ventilglied (16) aus einer die zweite Kanalöffnung (8) freigebenden Neutralstellung in eine die zweite Kanalöffnung (8) zumindest teilweise verschließende Steuerstellung bewegbar ist, um die auf das Ventilglied (16) während dessen anschließenden Umschaltens in die Schließstellung einwirkende Strömungskraft zu verringern.

2. Mikroventil nach Anspruch 1, **dadurch gekennzeichnet, dass** die Schaltbewegungen des Ventilgliedes (16) und des Steuergliedes (22) zumindest annähernd rechtwinkelig zur Ausdehnungsebene der Trennwand (3) orientiert sind.

3. Mikroventil nach Anspruch 1 oder 2, **dadurch gekennzeichnet, dass** die zweite Kanalöffnung (8) in der Steuerstellung des Steuergliedes (22) von diesem lediglich teilweise verschlossen ist.

4. Mikroventil nach einem der Ansprüche 1 bis 3, **dadurch gekennzeichnet, dass** die elektrostatischen Kräfte des weiteren elektrostatischen Antriebes (2') in Richtung der Neutralstellung auf das Steuerglied (22) einwirken.

5. Mikroventil nach einem der Ansprüche 1 bis 4, **dadurch gekennzeichnet, dass** das Steuerglied (22) so ausgebildet und angeordnet ist, dass es bei deaktiviertem weiterem elektrostatischem Antrieb (2') strömungsunterstützt in die Steuerstellung bewegt wird.

6. Mikroventil nach einem der Ansprüche 1 bis 5, **dadurch gekennzeichnet, dass** das Steuerglied (22) durch Federkraft in Richtung der Steuerstellung vorgespannt ist.

7. Mikroventil nach einem der Ansprüche 1 bis 6, **dadurch gekennzeichnet, dass** das Ventilglied (16) so ausgebildet ist, dass es im drucklosen Zustand des Systems bei gleichzeitig deaktiviertem elektrostatischem Aktor (2) die Schließstellung einnimmt.

8. Mikroventil nach einem der Ansprüche 1 bis 7, **dadurch gekennzeichnet, dass** das Ventilglied (16) und/oder das Steuerglied (22) membran- oder zungenartig ausgebildet sind.

9. Mikroventil nach einem der Ansprüche 1 bis 8, **gekennzeichnet durch** eine Ausgestaltung als 2/2- oder 3/2-Wegeventil.

10. Verfahren zum Betreiben eines elektrostatischen Mikroventils, das über einen eine Trennwand (3) durchsetzenden Durchgangskanal (6) verfügt, dessen erste Kanalöffnung (7) durch ein elektrostatisch betätigbares Ventilglied (16) wahlweise verschlossen oder freigegeben werden kann, wobei zum Umschalten des Ventilgliedes (16) in die Schließstellung die zweite Kanalöffnung (8) des Durchgangskanals (6) mittels eines elektrostatisch betätigbaren Steuergliedes (22) zumindest teilweise verschlossen wird, um die auf das Ventilglied (16) einwirkende Strömungskraft zu reduzieren.

11. Verfahren nach Anspruch 10, **dadurch gekennzeichnet, dass** das Steuerglied (22) in eine die zweite Kanalöffnung (8) wieder freigebende Neutralstellung zurückgeschaltet wird, nachdem das Ventilglied (16) in die Schließstellung umgeschaltet wurde.

12. Verfahren nach Anspruch 10 oder 11, **dadurch gekennzeichnet, dass** das Umschalten des Steuergliedes (22) in die die zweite Kanalöffnung (8) zumindest teilweise verschließende Steuerstellung durch das zum Durchgangskanal (6) strömende Fluid unterstützt oder hervorgerufen wird.
